# EUROPÄISCHE PATENTSCHRIFT

(11) **EP 1 073 988 B1**
(45) Veröffentlichungstag und Bekanntmachung des Hinweises auf die Patenterteilung: **16.01.2002**
(21) Anmeldenummer: 99927701.5
(22) Anmeldetag: 21.04.1999
(51) Int. Cl.: G06K 9/20, A61B 5/117

(54) **SYSTEM ZUR BERÜHRUNGSLOSEN HAND- UND FINGERLINIEN-ERKENNUNG**
SYSTEM FOR CONTACTLESS RECOGNITION OF HAND AND FINGER LINES
SYSTEME POUR LA RECONNAISSANCE SANS CONTACT DES LIGNES DE LA MAIN ET DES DOIGTS

(30) Priorität: 24.04.1998 DE 19818229
(43) Veröffentlichungstag der Anmeldung: 07.02.2001
(73) Patentinhaber: TST-Touchless Sensor Technology AG, 89231 Neu-Ulm (DE)
(72) Erfinder: HAUKE, Rudolf, 89168 Niederstotzingen (DE); EINIGHAMMER, Hans, J., 40225 Düsseldorf (DE); EINIGHAMMER, Jens, 72070 Tübingen (DE)
(74) Vertreter: Hentrich, Swen Dipl.-Phys. Dr.
(86) Internationale Anmeldenummer: DE9901204
(87) Internationale Veröffentlichungsnummer: WO9956237

(56) Entgegenhaltungen:
- EP-A- 0 294 716
- FR-A- 2 587 522
- US-A- 4 936 680
- US-A- 5 177 802

## Beschreibung

Die Erfindung betrifft ein Verfahren und eine Vorrichtung zur optischen Abbildung von Hand- und Fingerlinien ohne Hautkontakt für die Personenidentifizierung sowie einen Erkennungsalgorithmus.

Die Papillarleistenmuster der Finger, die seit langem in Form des Fingerabdrucks auf Gegenständen oder auf Papier in der Kriminologie benutzt oder von Analphabeten als Unterschrift verwendet wurden, haben in letzter Zeit Bedeutung erlangt als Berechtigungs-Kontrollcode für den Zugang zu Wertschränken, Tresorräumen, Computern und anderen gesicherten Objekten.

Das Hinterlegen eines permanenten Farb- oder Fettabdrucks wäre hierbei jedoch unpraktikabel, da eine unmittelbare schnelle Computerauswertung erfolgen muß sowie die häufige Benutzung jeweils des gleichen Applikators vorausgesetzt wird. Es wurden daher zunächst Verfahren entwickelt, die das Bild des Abdrucks auf einer Glasfläche durch optische Abbildung unter Ausnutzung von Verhinderter Totalreflexion oder von Verhinderter Teilreflexion an brechender Grenzfläche kurzzeitig sichtbar machen.

Handlinienmuster sind ebenfalls zur Identifikation von Personen geeignet Das Verfahren des Abdrucks auf eine Glasfläche ist hier ebenfalls durchführbar, hat sich jedoch nicht durchgesetzt, schon weil die Apparaturen wesentlich größer und aufwendiger sein müßten. Daher sind auch die Auswertealgorithmen hierfür noch nicht weit entwickelt worden.

Wenn eine u. U. große Anzahl von Personen unbeobachtet und anonym ein Zugangskontrollsystem benutzt, das nach einem Hautlinienabdruck-Verfahren arbeitet, *wirkt es sich nachteilig aus, daß*
1. Verschmutzung auf der Meß- bzw. Andruckfläche entsteht, die vom Auswertealgorithmus nicht mehr toleriert wird. Die Verschmutzung könnte zwar relativ einfach durch Abwischen, notfalls mit Pflegemitteln, beseitigt werden. *Nachteilig ist aber* dann, daß Kooperation und Sorgfalt bei den beteiligten Personen vorliegen muß, was nicht immer vorausgesetzt werden kann, oder der Betreiber eine entsprechende Pflege oder Wartung des Systems durchführt, was personalaufwendig sowie kostenintensiv.
2. die Kontaktfläche des Sensors ein Teil des Meßstrahlengangs ist, der immer frei zugänglich sein muß, so daß bei Vandalismus oder Sabotage wesentliche Systemkomponenten beschädigt werden können.
3. über die Andruckfläche des Applikators indirekt ein Kontakt mit vielen Personen zustandekommt, der vom hygienischen Standpunkt aus vermieden werden sollte. Das gilt insbesondere für Bereiche in Krankenhäusern sowie für medizinische und biologische Sicherheitsbereiche.
4. über die Andruckfläche des Applikators chemische oder radioaktive Kontamination übertragen werden kann.
5. Hautkontaktverfahren aus psychologischen Gründen weniger akzeptiert werden als andere Verfahren, z.B. wegen der Assoziation einer "Verbrecherdatei", Angst vor Anstekkung oder Abneigung gegen Hautkontakt, letztere z.B. auch ethnisch bedingt.
6. Die Mehrzahl bekannter optischer Abdruckverfahren bildet die äußerste Oberfläche der Haut als Störung der Reflexion an einer Glasfläche ab. *Nachteilig wirkt sich hierbei aus*, daß tiefer liegende Hautinhomogenitäten und Durchblutungsmuster, die ebenfalls individuelle Information enthalten, so nicht zugänglich sind. Dadurch ist die Erkennungsschärfe dieser Verfahren eingeschränkt.
7. Viele bekannte Hautmustererkennungsverfahren zielen darauf ab, die echte Hautoberfläche (das Relief) zu ermitteln. *Nachteilig ist hierbei,* daß Reliefs durch plastische Abdruckverfahren leicht reproduziert werden können und dadurch Möglichkeiten des Betrugs bestehen.
8. Bei allen Hautkontaktverfahren verbleibt auf der Oberfläche der Apparatur ein kaum sichtbarer Abdruck, der klassische Finger- oder Handlinienabdruck. *Nachteilig ist hierbei*, daß dieser Abdruck mit Mitteln der Spurensicherung sichtbar gemacht und mißbräuchlich benutzt werden kann, und daß er bei hohen Sicherheitsansprüchen z.B. durch Wegwischen beseitigt werden müßte.
9. Zu nennen ist natürlich auch die herkömmliche einfache Methode, Hautlinien mit einer Kamera ohne Objektkontakt abzubilden. Da die Haut bei herkömmlicher Beleuchtung immer etwas durchscheinend ist und das Licht in einem gewissen Volumen diffus streut und da gleichzeitig die oberste Schicht der Papillarleisten mehr oder weniger glänzend reflektiert, sieht die Kamera, so wie das menschliche Auge, normalerweise eine nicht definierte Überlagerung von Ober- und Unterhautbild.

Es ist im Prinzip möglich, mittels gerichteter Schrägbeleuchtung den Kontrast der Papillarlinien und Hautfurchen zu erhöhen, um das Oberhautbild hervorzuheben. *Nachteilig wirkt sich hierbei aus*, daß die Methode nicht im ganzen Gesichtsfeld einheitlich wirkt, sondern von der Richtung des Linienmusters relativ zur Beleuchtung abhängt (Schatteneffekte) sowie von der Welligkeit der Objektoberfläche (Glanzeffekte). Eine Schrägbeleuchtung von allen Seiten oder eine diffuse Beleuchtung gleicht zwar die Welligkeit optisch aus, verschlechtert aber den Kontrast der Stege , da der Anteil der diffusen Reflexion ansteigt.

Eine relativ starke Glanz- und Kontrastwirkung erzielt man bei schräger Beleuchtung und schräger Aufnahmerichtung (entsprechend dem Reflexionsgesetz), besonders bei großen Einfalls- bzw. Aufnahmewinkeln. Nachteilig wirkt sich hierbei aus, daß bei schräg gestelltem Objekt eine Entzerrung, z.B. nach Scheimpflug, notwenig ist, die apparativ aufwendig ist, und der Umstand, daß die Welligkeit der Haut stark stört (Bildverzerrungen).

Aus der US 4 936 680 ist es zur verbesserten Darstellung von Details eines Fingerabdruckes bekannt, unterhalb eines einzelnen Polarisationsfilters ein Lampenpaar anzuordnen, dessen Verbindungsachse parallel zum Polarisationsvektor des Polarisationfilters liegt, und ein weiteres Lampenpaar vorzusehen, dessen Verbindungsachse senkrecht zum Polarisationsvektor liegt. Über einen Motor und einen Antriebsriemen wird das Polarisationsfilter zusammen mit den Lampen verdreht, während durch ein Lampenpaar ein einzelner oberhalb des Polarisationsfilters angeordneter Finger beleuchtet wird. Während der Drehung des Polarisationsfilters wird während eines Drehwinkels von 3 Grad jeweils ein Bild von einer Kamera aufgenommen und in einer Speichereinheit hinterlegt. Nach dem Abschluß einer Drehung wird das eine Lampenpaar ausgeschaltet und das andere Lampenpaar eingeschaltet, wobei sich eine weitere Drehung um einen Winkel von 90° anschließt, damit die Startposition des zweiten Lampenpaares identisch mit der des zuvor genutzten Lampenpaares übereinstimmt. Nachdem diese Startposition erreicht ist, wird erneut während einer Drehung des Polarisationsfilters in Intervallen von 3 Grad ein Bild durch die Kamera aufgezeichnet und in einer zweiten Speichereinheit abgelegt. Nach Abschluß dieser weiteren Drehung können die Daten aus der ersten Speichereinheit und aus der zweiten Speichereinheit benutzt werden, um insbesondere durch Differenzbildung ein detailreiches Abbild des Fingerabdruckes zu erhalten. Allerdings ist festzustellen, daß die notwendige Verdrehung des Polarisationsfilters mittels eines Motors diese Vorrichtung störanfällig macht und darüberhinaus in der Herstellung verteuert. Die Gesamtmeßzeit ist sehr hoch, da der Fingerabdruck durch die Kamera mit vielen Einzelbildern abgefilmt wird, wobei nicht sicher gestellt ist, daß die Bedingungen während der zweiten Meßreihe genau mit denen der ersten Meßreihe übereinstimmen, da in der Regel der Finger während der gesamten 2,25 Umdrehungen nicht ruhig gehalten wird.

Die beschriebenen Nachteile bekannter Verfahren werden erfindungsgemäß durch ein Verfahren zur Personenidentifizierung anhand von deren Hand- und/oder Fingerlinien gemindert oder beseitigt, bei dem diese Hand- und/oder Fingerlinien mittels eines im Beleuchtungsstrahlengang angeordneten ersten Polarisationsfilters, einesim Abbildungsstrahlengang angeordneten zweiten Polarisationsfilters und einer Kamera, unter Verzicht auf mechanische Bewegungen der Anordnung, optisch berührungslos erfaßt werden.

Die Arbeitsweise wird hierbei durch Verwendung polarisiertes Lichtes verbessert. Einerseits wird hierdurch (a) durch bevorzugte Abbildung der glänzenden Strukturen der Kontrast der Papillarleisten wesentlich vergrößert. Die Papillarleisten können andererseits aber auch (b) durch Ausfilterung der glänzenden Strukturen unsichtbar gemacht werden, so daß das Muster der Unterhaut sichtbar wird. Insbesondere wird durch Verwendung polarisierten Lichts im Beleuchtungs- und im Abbildungsstrahlengang eine definierte Selektion von Oberhaut- und Unterhautmuster möglich. Es ist eine hervorgehobene Darstellung der glänzenden Oberhaut allein, eine hervorgehobene Darstellung der diffus reflektierenden Unterhaut allein oder eine Darstellung beider Hautmuster in Kombination, z.B. kurz nacheinander, möglich. Das Unterhautmuster ist überwiegend durch die tieferliegenden Strukturen, insbesondere die der angrenzenden, bereits durchbluteten Schichten der Haut gegeben. Im Falle linear polarisierten Lichts kommt das Oberhautmuster bei im Beleuchtungs- und Abbildungsstrahlengang parallel eingestellten und das Unterhautmuster bei senkrecht eingestellten Polarisationseinrichtungen zur Abbildung.

Im Fall zirkular polarisierten Lichts kommt das Oberhautmuster bei in Beleuchtungs- und Abbildungsstrahlengang ungleichsinnig eingestellter Polarisationsdrehung zur Abbildung, wobei die Richtung der Drehung (Rechts- oder Linksdrehend) hier als Drehrichtung des E-Vektors in Fortpflanzungsrichtung des Lichts blickend definiert ist.

Im einzelnen stellen sich die Vorteile wie folgt dar:
1. Das Sensorsystem ist, da es nicht berührt wird, vor Verschmutzung durch die Benutzer geschützt, was eine häufige Pflege und Kontrolle überflüssig macht.
2. Das System kann vollständig hinter einer Schutzwand z.B. aus Panzerglas untergebracht werden, so daß es vor Vandalismus oder Sabotage geschützt ist.
3. Die Vorrichtungen können so ausgeführt werden, daß zur Sicherstellung der Hygiene indirekte Kontakte mit anderen Personen ausgeschlossen sind.
4. Die Vorrichtungen können so ausgeführt werden, daß keine chemischen oder radioaktiven Kontaminationen übertragen werden.
5. Psychologische Gründe wie die Assoziation an eine "Verbrecherdatei", die Angst vor Ansteckung oder die Angst vor Hautkontakt entfallen, da die Vorrichtung berührungslos arbeitet
6. Im Gegensatz zu einer Anzahl von optischen Kontaktverfahren werden bei der vorliegenden Erfindung Unterhautstrukturen mit zusätzlichem Informationsgehalt zugänglich gemächt.
7. Die Sicherheit vor Betrug wird verbessert, da Unterhautstrukturen - so wie bei einem Wasserzeichen - nicht so leicht kopiert oder gefälscht werden können und weil insbesondere die Kombination der beiden unterschiedlichen Kontrastarten mißbräuchlich nicht so leicht gelingen dürfte.
8. Es entsteht kein Finger- oder Hautlinienabdruck auf der Apparatur, der mißbräuchlich z.B. zur Herstellung eines Hautduplikats, etwa aus Gummi, verwendet werden könnte.
9. Im Gegensatz zur herkömmlichen Abbildung mit einer Kamera können bei der vorliegenden Erfindung Ober- und Unterhautbild separiert und getrennt ausgewertet werden.

Das erfindungsgemäße Verfahren erlaubt im Gesichtsfeld einheitliche Wirkung und Unabhängigkeit von der Richtung der Linien und der Welligkeit der Oberfläche. Eine Schrägstellung des Objekts zur Nutzung der Glanzwinkelbedingung und die damit verbundene Entzerrung ist nicht notwendig.

Einzelheiten der Erfindung werden nachstehend an Hand von Ausführungsbeispielen in Verbindung mit den zugehörigen Zeichnungen beschrieben.

Von den Zeichnungen zeigt:
- Figur 1: die Seitenansicht einer ersten Vorrichtung zur berührungslosen Fingerlinien-Erkennung,
- Figur 2 und 3: den Beleuchtungsstrahlengang der Vorrichtung von Figur 1 in Drauf- bzw. Vorderansicht,
- Figuren 4 bis 6: Ausführungsbeispiele eines Sensorsystems zur Erkennung von Hautlinien der Ober- und Unterhaut und
- Figur 7: eine Positionsschablone für eine Hand.

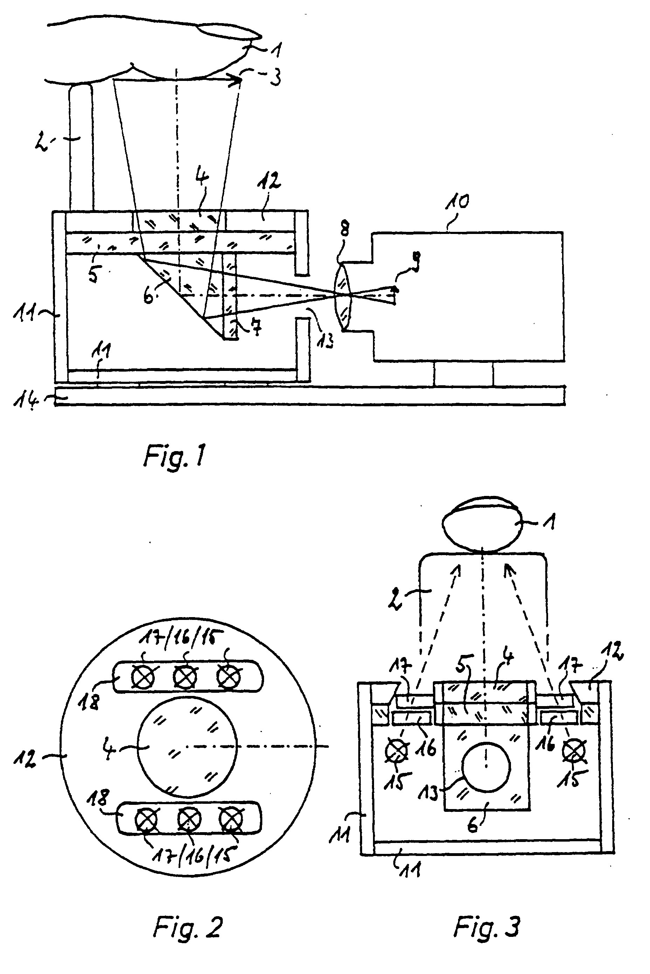

In den Figuren 1 bis 3 ist als Beispiel eine Vorrichtung für die Fingerlinienabbildung beschrieben, die als Tischmodell ausgeführt ist. Sie ist für die Oberhautabbildung fest eingestellt. Der Finger 1 wird auf die Stütze 2 aufgelegt, so daß er sich in der Gegenstandsebene 3 bzw. deren Schärfebereich befindet und über ein Störlichtfilter 4, die Trägerplatte 5 (z.B. Acrylglas), das Umlenkprisma 6 und das Polarisationsfilter 7 mit der Kamera 10 aufgenommen werden kann, die das Objektiv 8 und einen Bildempfänger (z.B. ein CCD-Chip) in der Bildebene 9 enthält und weiterhin hier nicht dargestellte Komponenten für die Bildverarbeitung enthalten kann. Die Teile 4, 5, 6 und 7 sind aus konstruktiven Gründen miteinander optisch verkittet, wobei die Halteplatte 5 mit dem Gehäusetopf 11 fest verbunden ist. Die Abdeckplatte 12, die gewisse Kräfte aufnehmen und ableiten muß, die an der Stütze 2 angreifen, ist ebenfalls am Rand mit dem Gehäusetopf 11 verbunden (und nicht etwa mit der Halteplatte 5). Der Gehäusetopf 11 weist eine Bohrung 13 für den Lichtaustritt auf. Gehäusetopf 11 und Kamera 10 sind über die Grundplatte 14 fest verbunden.

Fig. 2 und 3 zeigen den Beleuchtungsstrahlengang. Die Lichtquellen 15, die in zwei Dreiergruppen seitlich von Prisma 6 angebracht sind (in der Schnittebene von Fig. 1 nicht sichtbar), sind z.B. als Leuchtdioden mit Fokussierlinsen ausgebildet und mit ihrer Richtkeule auf das Objekt 1 ausgerichtet. Dabei sind jeweils Streuscheiben 16 mit Vorwärtscharakteristik und Polarisationsfilter 17 zwischengeschaltet. Für den Austritt des Lichts aus dem Gehäusetopf 11 sind zwei Schlitze 18 in der Abdeckplatte 12 sowie entsprechende Schlitze in der Trägerplatte 5 vorgesehen. Anstelle von einzelnen Polarisationsfiltern 17 können auch 2 durchgehende Polarisationsfolien verwendet werden, die jeweils 3 Lichtquellen abdecken.

Zur Justierung des Sensors für die separate Abbildung des Oberhautmusters müssen im Fall der Verwendung von linear polarisiertem Licht alle Polfilter 17 und das Polfilter 7 im Abbildungsstiengang in die gleiche Richtung eingestellt werden. Man erzielt die beste Wirkung für die Selektion der Oberhaut, wenn die gemeinsame Polarisationsrichtung (E-Vektor) parallel zur Zeichenebene der Fig. 1 und 2 , bzw. senkrecht zur Zeichenebene der Fig. 3 liegt. Die zuletzt genannte Ebene ist die Reflexionsebene, in der die Haut bei schräger Beleuchtung und Einhalten der Reflexionsbedingung (etwa Brewster-Winkel) polarisierende Wirkung zeigt. Bei annähernd senkrechter Beleuchtung ist die gemeinsame Polarisationsrichtung beliebig. Im Fall der Verwendung von zirkular polarisiertem Licht müssen die Filter 17 und 7 bezüglich der Drehposition nicht justiert werden.

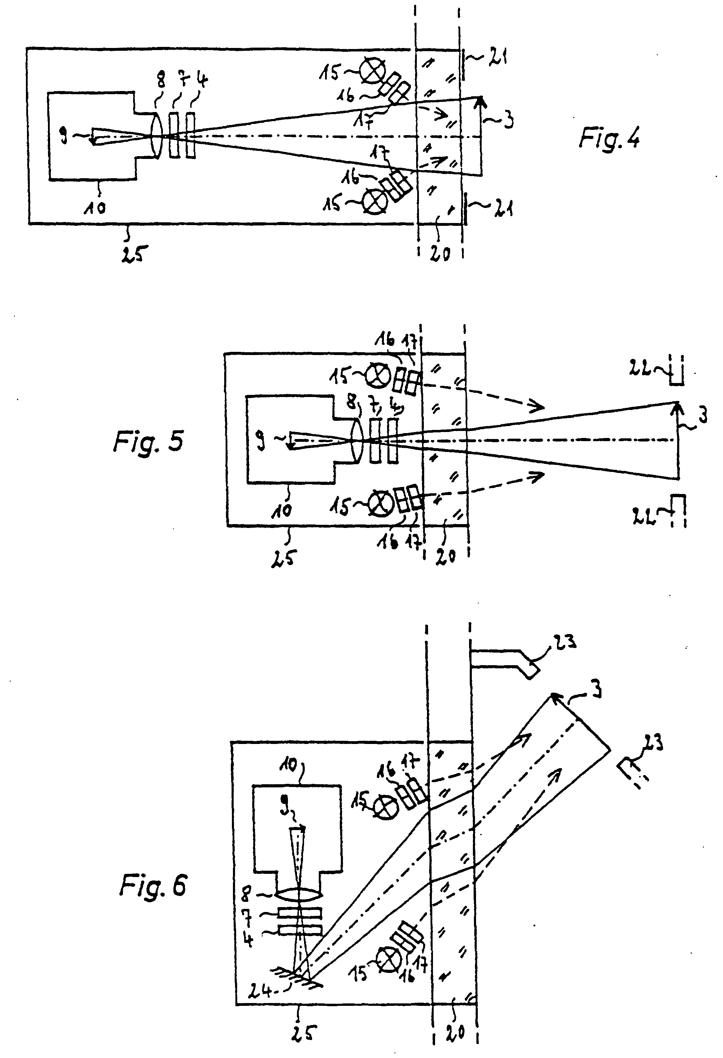

In Fig. 4 bis 6 sind Ausführungsbeispiele für ein Sensorsystem zur Erkennung von Hautlinien der Ober- und Unterhaut beschrieben. Diese Vorrichtungen können Vorteilhafterweise als Wandeinbaueinheit ausgebildet sein. Das System ist in einem Gehäuse 25 untergebracht, das auf einer Seite ein Panzerglasfenster 20 aufweist. Erfindungsgemäß kann das Gehäuse mit dem Sensorsystem auch vor eine vorhandene, größere Panzerglaswand montiert werden.

Polarisations- und Störlichtfilter sind in Fig. 4 als Kamerafilter 7 und 4 vor dem Objektiv 8 angeordnet. Die Kamera 10 ist auf die Objektebene 3 gerichtet, die sich im Außenraum etwa 4 cm vor der Glasplatte 20 befindet. Die Beleuchtung besteht aus 4 Lampen 15, von denen 2 gezeichnet sind, die als Richtstrahler, z.B. kleine Halogenscheinwerfer ausgebildet, und die auf die Objektebene 3 ausgerichtet sind. Vorgeschaltet sind jeweils eine Streuscheibe 16, die je nach Lampentyp eventuell auch entbehrlich ist und ein Polarisationsfilter 17.

Die Einstellung der Polarisationsfilter erfolgt im Falle der Verwendung linear polarisiertem Lichts so, daß das in der Zeichenebene dargestellte Lampenpaar senkrecht zur Zeichenebene polarisiert ist. Wenn das Kamerafilter 7 ebenfalls senkrecht zur Zeichenebene eingestellt ist, wird mit dieser Anordnung das Oberhautbild gewonnen (wie im vorhergehenden Beispiel Fig. 1).

Zur Darstellung des Unterhautbildes kann das Kamerafilter 7 mit einem elektrischen Antrieb, der zwei Rastpunkte vorsieht, um 90 Grad gedreht werden. Robuster ist jedoch eine Anordnung, die auf mechanische Bewegungen verzichtet. Dazu ist bei feststehendem Filter 7 ein zusätzliches Lampenpaar gleicher Ausführung notwendig, das einschließlich der justierten Filter, gegenüber dem in Fig. 4 dargestellten in der optischen Achse um 90 Grad verdreht ist. Die beiden Lampenpaare werden zur Aufnahme von Ober- und Unterhautbild kurz nacheinander ein- und ausgeschaltet.
Bei Verwendung von zirkular polarisiertem Licht kann genauso verfahren werden , jedoch ist hier eine Filterjustierung nicht notwendig und die Polarisationsdrehung von Filter 7,17 und gedrehter Anordnung 17 muß entsprechend der vorhergehenden Erläuterung beachtet werden.

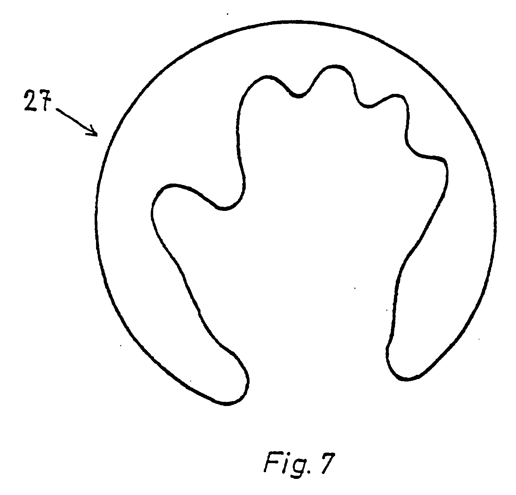

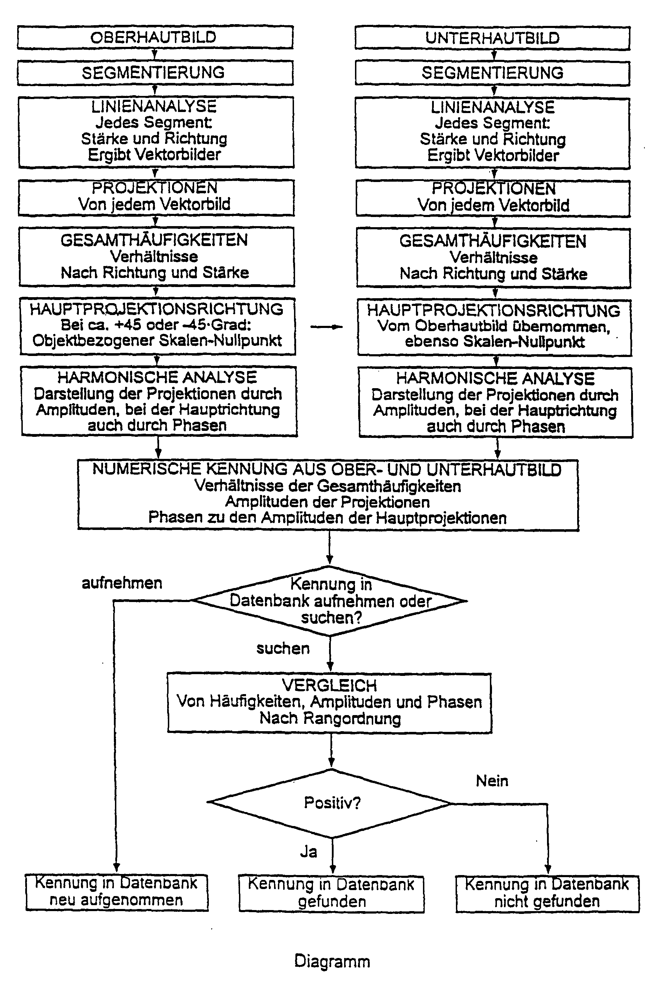

Der Benutzer hat die Aufgabe, seine Hand mit der Innenfläche nach vorn in den Schärfebereich 3 hineinzuführen, ohne die Scheibe zu berühren. Als Positionierhilfe dient dabei eine in Fig. 7 dargestellte Schablone 27, die sich auf der Glasscheibe befindet. Auf der Schablone sind, z.B. in vereinfachter oder stilisierter Form, die Umrisse einer Hand mit gespreizten Fingern dargestellt. Das Handlinienmuster sollte immer bei gespreizten Fingern aufgenommen werden, weil dann weniger Bildverzerrungen durch den Faltenwurf der Haut auftreten.

Der Benutzer soll durch das Bild dazu animiert werden, ebenfalls die Finger zu spreizen, da erfahrungsgemäß entsprechende Hinweise in einer Gebrauchsanweisung nicht immer befolgt werden.

Der Strahlengang kann durch einen Spiegel oder ein Prisma geknickt werden, um eine kompaktere Einheit zu erhalten (nicht dargestellt ).

Fig. 5 ist eine Variante des vorhergehenden Ausführungsbeispiels, wobei sich die Objektebene 3 in einigem Abstand von der Wand befindet. Die Entfernung kann auch etliche Meter betragen. Diese Ausführung ist für den Fall interessant, daß Zugang und Kontrolle nicht am gleichen Ort stattfinden, das Sensorsystem sich mit im geschützten Bereich befindet (hinter der Panzerglasscheibe) und eine Sichtverbindung dazu besteht. Die Beleuchtungselemente 15, 16, 17 befinden sich hierbei nahe bei der Kamera 10 und das Volumen des Gehäuses 25 wird dadurch relativ klein. In diesem Fall ist die Positionierungshilfe als Rahmen 22 ausgebildet, der innen die vereinfachten oder stilisierten Umrisse einer Hand mit gespreizten Fingern aufweist, der an einer Wandhalterung, oder bei größerem Abstand auf einer freistehenden Säule oder an anderer Stelle montiert ist. Der Benutzer hat die Aufgabe, seine Hand in den Rahmen hineinzuführen und mit dem Muster zur Deckung zu bringen. Die Abmessungen des Rahmeninneren sind so gewählt, daß eine Berührung ohne Schwierigkeit vermieden werden kann.

In Fig. 6 ist eine weitere Variante dargestellt, bei der die Positionierplatte 23 in Schrägstellung an der Wand befestigt ist. Hierdurch wird eine bequemere Handhaltung ermöglicht sowie ein kompakter Aufbau durch den an dem Spiegel 24 geknickten Strahlengang. Der schräge Strahlendurchtritt durch die Panzerglasplatte 20 verursacht eine gewisse Bildverzerrung, die nicht gravierend ist und nachträglich korrigiert werden kann. Eine weitere, hier nicht dargestellte Variante sieht vor, daß das Gehäuse mit Kamera und Beleuchtung in z.B. nicht erreichbarer Höhe, etwa an der Decke, montiert und mit dem Sichtfenster nach unten gerichtet ist und daß als Positionierhilfe ein Rahmen in der Art des Rahmens 22 oder 23 verwendet wird, der jedoch waagerecht montiert ist und in den die Hand mit der Innenfläche nach oben hineingeführt wird. Ein derartiger Rahmen kann ganz oder teilweise aus Kunststoff bestehen, wobei in diesem bedarfsweise auch eine Antenne integriert sein kann.

Eine weitere Positionierhilfe für die zuletzt genannte Anordnung ist ein von oben in die Objektebene der Kamera projiziertes Luftbild. Erfindungsgemäß ist dieses Luftbild ein Doppelbild, das von 2 Projektoren, die nebeneinander angeordnet sind, so erzeugt wird, daß beide Teilbilder nur in der Objektebene der Kamera genau zur Deckung kommen und bei richtiger Position der Hand auf dieser deckungsgleich erscheinen.

Als Hilfe beim Positionieren der Hand kommen auch holographisch hergestellte Luftbilder z.B. von Marken, Handkonturlinien oder Händen in Frage. Die Hologrammplatte wird dabei vorzugsweise innen vor der Panzerglasscheibe angebracht Für den Kameradurchblick kann ein kleines Loch im Hologramm dienen.

Bei den zuletzt genannten Ausführungsanordnungen, bei denen Luftbilder als Positionierhilfe verwendet werden, kann auch ein versehentliches Berühren von irgendwelchen Teilen der Anlage ausgeschlossen werden.

Um zu verhindern, daß Umgebungslicht, insbesondere Tageslicht, die Messung stört und einfache Maßnahmen wie Beseitigung der Störquellen, Abdecken mit einer Abschirmung etc. nicht ausreichen, kann die Vorrichtung wie folgt gegen Störlicht unempfindlicher gemacht werden: 1. Die Abdeckplatte 12 und die Fingerstütze 2 im ersten Ausführungsbeispiel sollten dunkel, am besten schwarz ausgebildet sein, und die Oberfläche sollte aufgerauht sein, damit wenig Fremdlicht reflektiert wird.

2. Es sollte schmalbandiges Licht, z.B. mit Hilfe von schmalbandigen Filtern oder durch Einsatz von farbigen Leuchtdioden oder Lasern auf der Beleuchtungsseite und entsprechende Filter mit schmalbandigem Durchgang auf der Abbildungsseite verwendet werden.

3. Impulsartige Beleuchtung wie Blitzlicht, gepulste Leuchtdioden (LEDs) oder gepulste Laserdioden sind zu kombinieren mit einer angepaßten kurzen Shutterzeit der Aufnahmekamera.

Schließlich sei noch erwähnt, daß in der Abdeckplatte 12, der Fingerstütze 2, der Schablone 21 sowie den Rahmen 22 und 23 der Platz für die Antenne eines berührungslosen (elektromagnetischen) Ausweislesers (proximity reader) zur Verfügung steht, so daß eine Kombination mit dieser Ausweislesemethode möglich ist.

### Softwarealgorithmus für die Handlinienerkennung

Der Vergleich zweier Handlinienmuster mit dem Ziel, über die Identität zu entscheiden, ist im Idealfall formal eine Korrelation der vollständigen Muster. Der Korrelationskoeffizient ist bei Übereinstimmung - eine gute Reproduktionsqualität sei vorausgesetzt - dann praktisch 100 %.

Wenn das Bild der zu identifizierenden Person auf diese Weise mit einer großen Anzahl von gespeicherten Komplettbildern verglichen werden muß, wäre jedoch der Bildverarbeitungsaufwand, insbesondere die Rechenzeit, zu groß. Crünstiger ist die Speicherung und der Vergleich von charakteristischen Kenndaten, die die für eine Entscheidung notwendigen Merkmale enthalten. Notwendig ist also eine Bilddaten-Kompression und Kodierung. Sie sollte den gewünschten Bedingungen, insbesondere der Entscheidungsschärfe, in einfacher Weise angepaßt werden können. Die hier gewählte Strategie der Bildverarbeitung ist in dem Diagramm dargestellt und wird im folgenden erläutert. Dabei wird im Text durch Unterstreichung auf die verschiedenen Blöcke des Diagramms Bezug genommen.

Abgesehen von einer eventuellen Unterdrückung sehr hoher und relativ niedriger Raumfrequenzen durch eine Filterung (hier nicht dargestellt) ist der erste Bearbeitungsschritt eine Segmentierung des Oberhaut- und Unterhautbildes. Dies ist eine Unterteilung in Untereinheiten, z.B. in Kästchen, die so erfolgt, daß die Zahl der Bildsegmente gegenüber der Pixelanzahl des Ausgangsbildes im Sinne der Datenkompression möglichst stark reduziert wird, die Detailauflösung im Segmentbild für die hier vorliegende Aufgabe jedoch noch ausreicht.

Bei der folgenden Linienanalyse werden die Segmentinhalte nach Linienelementen verschiedener Stärke **s** und Richtung **r**, mit etwa 2 bis 3 Werten für **s** und bis zu maximal etwa 8 Werten für **r**, untersucht. Mehrere gleichartige Vektoren (parallele Linienelemente gleicher Stärke) in einem Segment werden addiert. Jedes Segment kann also durch eine Anzahl verschiedener Vektorarten beschrieben werden. Betrachtet man jeweils nur eine Vektorart, d. h. eine Kombination von **r** und **s**, so resultieren Vektorbilder für die verschiedenen Vektorarten. Es kann im Rahmen der Optimierung des Algorithmus von Vorteil sein, Bilder verschiedener Vektorarten additiv zusammen zu fassen, z.B. um zu kleine Zahlenwerte zu vermeiden.

Die weitere Datenkompression erfolgt durch Projektion der Vektorbilder, d.h. Addition der Pixelwerte in verschiedenen Richtungen. Dies entspricht der Aufnahme einer Schnittebene nach dem Verfahren der Computertomographie, wobei das Objekt in diesem Fall ein bereits digitalisiertes Bildfeld mit ganzzahligen Pixelwerten kleiner als etwa 5 ist und der Wert Null relativ häufig vorkommt.

Mit einer hinreichend großen Anzahl von Projektionen gelingt es bekanntlich, mittels des CT-Algorithmus die Schicht eines Objekts zu rekonstruieren, da die Gesamtheit der Projektionen die vollständige Objektinformation enthält.

Die Bildrekonstruktion (Back Projection) wird hier nicht durchgeführt. Es wird jedoch die Information der Projektionsfunktionen benutzt, um das Handlinienbild zu kennzeichnen. Die Anzahl der Projektionen richtet sich nach der gewünschten Genauigkeit der Bildkennzeichnung. Es ist ein Vorteil des Verfahrens, daß die notwendige und hinreichende Genauigkeit durch eine einfache Vorschrift, nämlich die Wahl der Anzahl der Projektionen, eingestellt werden kann. Im Vergleich zur bekannten Computertomographie werden hierbei nur wenige Projektionen benötigt.

Aus den Projektionsfunktionen ergeben sich zunächst auf einfache Weise die Gesamthäufigkeiten für jede Vektorart. Die Gesamthäufigkeiten oder deren Verhältnisse eignen sich bereits für eine grobe Kennzeichnung des Linienmusters.

Der nächste Schritt ist die Ermittlung der Hauptprojektionsrichtung. Hierzu betrachten wir das Summenbild aus allen Vektorbildern mit der größten Linienstärke **s**, ohne Berücksichtigung der Richtung **r**, und die Projektionen dieses Summenbildes. Das Projektionspaar mit Richtungen bei ungefähr plus oder minus 45 Grad zur Längsachse der Hand ist hierbei ein bevorzugtes Paar, da die drei am stärksten ausgeprägten Hauptlinien, die Daumenfurche, die Fünffingerfurche und die Dreifingerfurche, in einer der beiden Projektionen - das ist davon abhängig, ob es sich um die rechte oder die linke Hand handelt - als Maxima mit großer Amplitude auftreten. Das gut identifizierbare Maximum z.B. der Fünffingerfurche kann zur Definition eines objektbezogenen Skalennullpunkts verwendet werden. Bei den anderen Projektionen kann, wenn ein sehr deutliches Maximum erkennbar ist, dieses ebenfalls zur Festlegung des Skalennullpunktes dienen. Anderenfalls wird der Nullpunkt willkürlich, z.B. am linken Bildrand, festgelegt.

Die Hauptprojektionsrichtung wird anhand der Ausprägung der Maxima im Bereich um plus oder minus 45 Grad vom Programm gesucht. Sie dient dann auch als Referenzrichtung für die anderen Richtungen. Auf diese Weise wird auch eine gewisse Rotationsinvarianz des Meßverfahrens hergestellt.

Zur weiteren Datenkompression werden die Projektionsfunktionen einer Harmonischen Analyse unterzogen, wobei für die Darstellung der Harmonischen Komponenten die kürzeste Form, die Amplitude und gegebenenfalls die Phase gewählt wird. Die Kennzeichnung aller Projektionen in der Hauptrichtung kann durch Amplituden- **und** Phasenwerte erfolgen. Bei den anderen Projektionen haben Phasenangaben nur in manchen Fällen einen Objektbezug und sind im allgemeinen für die Kennzeichnung nicht direkt geeignet.

Es soll noch eine Möglichkeit erwähnt werden, wie man die nicht objektbezogene Phaseninformation für die Musteridentifizierung verwerten kann: Man kann die Projektionsfunktionen aus in der Kennung abgelegten Amplituden und Phasen rekonstruieren und einen Vergleich der Kurvenformen mittels Korrelation durchführen. Diese Möglichkeit ist im Diagramm nicht dargestellt.

Die Numerische Kennung aus Ober- und Unterhautbild enthält Verhältnisse von Gesamthäufigkeiten von Vektorarten, Sätze von Amplituden der Harmonischen Komponenten der Projektionen sowie Phasen zu den Amplituden der Hauptprojektionen. Wieviele Projektionen bzw. Amplituden-/Phasensätze erstellt werden, muß empirisch ermittelt werden. Diese Art der Kennzeichnung von Handlinienmustern ist bezüglich der Hand translationsinvariant.

Die Merkmale können in der Numerischen Kennung in einer Art Rangordnung aufgestellt werden, die mit Globalaussagen beginnt und bei hochaufgelösten Mustern, d. h. bei Amplituden und Phasen der Harmonischen Komponenten für die hohen Raumfrequenzen endet. Der Vorgang des Merkmalvergleichs beginnt bei den Gesamthäufigkeiten und wird bei Nichtübereinstimmung abgebrochen. Die Qualität der Übereinstimmung von Handlinienbildern ist um so größer, je weiter man in der Rangordnung kommt, ohne eine Negativmeldung zu erhalten.

Die Analyse des Unterhautbildes, das nicht so stark (jedoch in anderer Weise) strukturiert ist wie das Oberhautbild, erfolgt in der gleichen Art, wobei die Skalennullpunkte für die Hauptprojektionen von den zugehörigen Oberhautbildem übernommen werden. Die Anzahl der Strichstärken s kann bei der Unterhaut geringer sein.

Ist eine Kennung berechnet worden, wird sie bei der erstmaligen Registrierung einer Person in die Datenbank aufgenommen. Soll ein Vergleich von Handlinienmustern durchgeführt werden, werden die Merkmale der zu prüfenden Kennung mit den in der Datenbank gespeicherten Kennungen der Rangordnung folgend verglichen, so daß, wie in dem Diagramm unten dargestellt ist, eine positive oder negative Entscheidung getroffen werden kann.

Im Gegensatz zu den Algorithmen der Fingerabdruckerkennung, die die Anzahl oder Anordnung von Minuzien - das sind Besonderheiten im Papillarleistenmuster - ermittelt, werden bei der hier vorgeschlagenen Handlinienerkennung (sinusförmige) Verteilungsmuster von "normalen" Linienelementen erfaßt. Der Informationsgehalt liegt dabei weniger in den drei genannten Hauptlinien, die individuell nicht sehr stark variieren, sondern mehr im Netz der etwas dünneren Nebenlinien.

## Patentansprüche

1. Verfahren zur Identifizierung von Personen unter Verwendung einer Lichtquelle (15), eines Polarisationsfilters und einer Kamera (10) anhand von deren Hand- und/oder Fingerlinien, bei dem die Hand- und/oder Fingerlinien, Muster der Papillarleisten, Muster der Unterhaut oder dergl. optisch berührungslos zur Aufnahme eines Bildes erfaßt werden,
**dadurch gekennzeichnet, daß** die Optisch berührungslose Erfassung mittels eines im Beleuchtungsstrahlengang angeordneten ersten Polarisationsfilters (17), eines im Abbildungsstrahlengang angeordneten zweiten Polarisationsfilters (7) und einer Kamera (10), bei starrer Anordnung, nämlich unter Verzicht auf mechanische Bewegungen der Anordnung erfolgt.

2. Verfahren zur Personenidentifizierung nach Anspruch 1, **dadurch gekennzeichnet, daß** mittels digitaler Bildverarbeitung eine numerische Kennung errechnet wird, die den Vergleich mit gleichartigen abgelegten Daten erlaubt.

3. Verfahren zur Personenidentifizierung nach Anspruch 1 oder 2, **dadurch gekennzeichnet, daß** eine zusätzliche Lichtquelle (15) mit einem dritten Polarisationsfilter (17) im Beleuchtungsstrahlengang vorgesehen ist, die einschließlich des justierten Polarisationsfilters (17) gegenüber dem ersten in der optischen Achse um 90 Grad verdreht ist.

4. Verfahren zur Personenidentifizierung nach Anspruch 3, **dadurch gekennzeichnet, daß** die beiden Lichtquellen (15) zur Aufnahme des Ober- und Unterhautbildes kurz nacheinander ein- und ausgeschaltet werden.

5. Verfahren zur Personenidentifizierung nach Anspruch 3 oder 4, **dadurch gekennzeichnet, daß** sowohl mit linear als auch zirkular polarisiertem Licht zur selektiven Darstellung von Unter- und Oberhaut gearbeitet wird.

6. Verfahren zur Personenidentifizierung nach Anspruch 5, **dadurch gekennzeichnet, daß** die Selektion des Oberhautmusters bei in Beleuchtungs- und Abbildungsstrahlengang ungleichsinnig eingestellter Polarisationsdrehung und die des Unterhautmusters bei gleichsinnig eingestellter Polarisationsdrehung erfolgt, wobei die Richtung der Drehung (Rechts- oder Linksdrehend) hier als Drehrichtung des E-vektors in Fortpflanzungsrichtung des Lichts blickend definiert ist.

7. Verfahren zur Personenidentifizierung nach einem der Ansprüche 3 bis 5, **dadurch gekennzeichnet, daß** die Selektion des Oberhautmusters bei im Beleuchtungs- und Abbildungsstrahlengang parallel eingestellten und die des Unterhautmuster bei senkrecht eingestellten Polarisationsrichtungen erfolgt.

8. Verfahren zur Personenidentifizierung nach Anspruch 7, **dadurch gekennzeichnet, daß** beide Muster koordinatengleich mit einer Kamera kurz hintereinander aufgenommen werden.

9. Verfahren zu Personenidentifizierung nach Anspruch 7, **dadurch gekennzeichnet, daß** jedes Muster mit jeweils einer Kamera aufgenommen wird.

10. Verfahren zur Personenidentifizierung nach mindestens einem der Ansprüche 3 bis 9, **dadurch gekennzeichnet, daß** der hierzu geeignete Informationsgehalt beider, koordinatengleich zur Verfügung stehender Hautmuster kombiniert wird.

11. Verfahren zur Personenidentifizierung nach mindestens einem der Ansprüche 1 bis 10, **dadurch gekennzeichnet, daß** die Erfassung der Hand- und/oder Fingerlinien aus größerer Distanz erfolt.

12. Verfahren zur Personenidentifizierung nach mindestens einem der Ansprüche 1 bis 11, **dadurch gekennzeichnet, daß** zur Erkennung von Fingerlinien mittels eines Erkennungsalgorithmus die relative Lage der Minuzien ermittelt und in Richtung einer Identifizierung ausgewertet wird. (z.B. Henry Code)

13. Verfahren zur Personenidentifizierung nach mindestens einem der Ansprüche 1 bis 12, **dadurch gekennzeichnet, daß** zur Erkennung der Fingerlinie des Oberhautmusters mittels eines Erkennungsalgorithmus die Häufigkeit orthogonaler Merkmale ermittelt und in Richtung einer Identifizierung ausgewertet wird.

14. Verfahren zur Personenidentifizierung nach mindestens einem der Ansprüche 1 bis 13, **dadurch gekennzeichnet, daß** zur Erkennung von Handlinien das Ausgangsbild in Segmente eingeteilt wird und in den Segmenten Linienabschnitte verschiedener Stärke und Richtung ermittelt werden.

15. Verfahren zur Personenidentifizierung nach Anspruch 14, **dadurch gekennzeichnet, daß** im Segmentbild die Linienabschnitte (Vektoren) nach Art einer computertomographischen Schnittbildaufnahme als Pixelwerte in verschiedenen Richtungen zu Häufigkeitsverteilungen aufsummiert werden. (Projektionen)

16. Verfahren zur Personenidentifizierung nach Anspruch 13, **dadurch gekennzeichnet, daß** die Projektionen durch die Amplituden und gegebenenfalls auch die Phasen der Komponenten ihrer Harmonischen Approximation (z.B. nach Hartley) **gekennzeichnet** und die Amplituden mit oder ohne Phasenangabe zur numerischen Musterkennzeichnung herangezogen werden.

17. Vorrichtung zur Durchführung des Verfahrens nach mindestens einem der Ansprüche 1 bis 16, mit einer auf die Hand- und/oder Fingerlinien, Muster der Papillarleisten, Muster der Unterhaut oder dergl. gerichteten ersten Lichtquelle (15) und einer Kamera (10) mit einem Bildempfänger (9), **gekennzeichnet durch** eine im Beleuchtungsstrahlengang angeordnetes erstes Polarisationsfilter (17) und **durch** ein im Abbildungsstrahlengang vor der Kamera (10), deren Objektiv (8) auf die Gegenstandsebene 3 scharfgestellt ist, angeordnetes zweites Polarisationsfilter (7).

18. Vorrichtung nach Anspruch 17, **dadurch gekennzeichnet, daß** im Abbildungsstrahlengang ein Umlenkprisma (6) angeordnet ist.

19. Vorrichtung nach Anspruch 18, **dadurch gekennzeichnet, daß** die Lichtquelle (15) durch ein beidseits des Umlenkprismas (6) angeordnetes Lampenpaar gebildet ist.

20. Vorrichtung nach Anspruch 18 oder 19, **dadurch gekennzeichnet, daß** beidseits des Umlenkprismas (6) ein zweites Lampenpaar mit einem dritten zugeordneten Polarisationsfilter (17) angeordnet ist.

21. Vorrichtung nach einem der Ansprüche 17 bis 20, **dadurch gekennzeichnet, daß** die Anordnung ohne mechanische Bewegungsmöglichkeit ausgeführt ist.

22. Vorrichtung nach Anspruch 20, **dadurch gekennzeichnet, daß** im Beleuchtungs- und Abbildungsstrahlengang um 90° gekreuzte lineare Polarisationsfilter (17) bzw. (7)angeordnet sind.

23. Vorrichtung nach mindestens einem der vorangegangenen Ansprüche, **dadurch gekennzeichnet, daß** die Lichtquellen (15) in Abhängigkeit von der Polarisationsrichtung der ihnen zugeordneten Polarisationsfilter (17) ein- und ausgeschaltet werden können.

24. Vorrichtung nach einem der Ansprüche 17 bis 23, **dadurch gekennzeichnet, daß** der Bildempfänger (9) ein CCD-Chip ist.

25. Vorrichtung nach Anspruch 17, **dadurch gekennzeichnet, daß** die Lichtquelle (15) ein Diodenlaser ist.

26. Vorrichtung nach Anspruch 17, **dadurch gekennzeichnet, daß** die Lichtquelle (15) eine Lampe mit glühenden Metallflächen unter schrägem Beobachtungswinkel ist.

27. Vorrichtung nach mindestens einem der vorangegangenen Ansprüche, **dadurch gekennzeichnet, daß** bei gleich polarisierten Lichtquellen (15) zwei Polarisationsfilter mit senkrecht aufeinander stehenden Richtungen im Abbildungsstrahlengang vorgesehen sind, die einzeln wahlweise in diesen verbracht werden können.

28. Vorrichtung nach Anspruch 17 bis 27, **dadurch gekennzeichnet, daß** die Kamera (10), die Beleuchtungseinrichtung (15,16,17) sowie gegebenenfalls weitere optische Zusatzeinrichtungen, wie z.B. Umlenkprisma (6), Entfernungsmesser, Hologrammbeleuchtung in einem mechanisch geschlossenen Gehäuse (11,12) untergebracht und optisch nur über eine Glasscheibe (20), z.B. aus Panzerglas zugänglich ist.

29. Vorrichtung nach Anspruch 28, **dadurch gekennzeichnet, daß** die Identifizierungsvorrichtung als Wandeinbaueinheit ausgebildet ist.

30. Vorrichtung nach mindestens einem der vorangegangenen Anpsrüchen, **dadurch gekennzeichnet, daß** Hand und/oder Finger mittels einer Schablone (21), Rahmens (22;23) im Gesichtsfeld und im Schärfebereich der Kamera (10) positioniert werden können.

31. Vorrichtung nach Anspruch 30, **dadurch gekennzeichnet, daß** die innere Kontur der Schablone (21) des Rahmens (22;23) die angedeutete Form des Umrisses einer Hand mit gespreizten Fingern nach Art der Positionierungsschablone (27) aufweist.

32. Vorrichtung nach Anspruch 30 und/oder 31, **dadurch gekennzeichnet, daß** der Rahmen (22;23) in Form eines holographisch erzeugten Luftbildes gegeben ist.

33. Vorrichtung nach Anspruch 30, **dadurch gekennzeichnet, daß** der Rahmen (22;23) teilweise oder ganz aus Metall besteht und hochfrequenzmäßig so ausgeführt und angepaßt ist, daß er die Antennenfunktion eines berührungslos arbeitenden Ausweislesers (proximity reader) besitzt.

34. Vorrichtung nach mindestens einem der Ansprüche. 30 bis 33, **dadurch gekennzeichnet, daß** dem Rahmen (22;23) ein auf eine feste Distanz eingestellter optischer Entfernungsmesser zugeordnet ist, mit dem die Bildaufnahme gesteuert werden kann.

35. Vorrichtung nach Anspruch 34, **dadurch gekennzeichnet, daß** der Entfernungsmesser optisch nach dem Prinzip der Triangulation arbeitet.

36. Vorrichtung nach mindestens einem der vorangegangenen Ansprüche, **dadurch gekennzeichnet, daß** das Einschalten der Vorrichtung in den Bereitschaftszustand und/oder das Auslösen des Meßvorgangs durch die Herstellung einer kapazitiven Verbindung mit dem Boden, auf dem sich der Benutzer befindet, über dessen Körper erfolgt bzw. durch kapazitive Verstimmung des als HF-Antenne arbeitenden Positionierungsrahmens oder einer im Rahmen integrierten Antenne erfolgt, wenn die Hand im Positionierrahmen in die richtige Stellung kommt ist.

37. Vorrichtung nach mindestens einem der vorangegangenen Ansprüche, **dadurch gekennzeichnet, daß** in der Fingerstütze (2) oder der Abdeckplatte (12) die Antenne eines berührungslos arbeitenden Ausweislesers integriert ist.

38. Vorrichtung nach einem der Ansprüch 17 bis 37, **dadurch gekennzeichnet, daß** im Beleuchtungs- und Abbildungsstrahlengang zirkular polarisierende Filter (17,7) vorgesehen sind, die entsprechend ihrer Eigenschaft geeignet sind, das Ober- und Unterhaubild darzustellen.

## Claims

1. Method for the identification of people using a light source (15), a polarisation filter and a camera (10) on the basis of their hand lines and/or finger lines, in which the hand lines and/or finger lines, patterns of dermal ridges, patterns of the hypodermis or the like are optically recorded, in a contactless manner, for the purpose of taking a picture,
**characterised in that**
the optical contactless data acquisition takes place by means of a first polarisation filter (17) arranged in the illumination beam path, a second polarisation filter (7) arranged in the image beam path, and a camera (10), in a rigid arrangement, namely without mechanical movements of the arrangement.

2. Method for the identification of people in accordance with claim 1,
**characterised in that** by means of digital image processing, a numeric identification is calculated, which enables comparison with data of the same type which have been stored.

3. Method for the identification of people in accordance with claim 1 or 2,
**characterised in that** an additional light source (15) with a third polarisation filter (17) is provided in the illumination beam path, which - including the adjusted polarisation filter (17) - is rotated in the optical axis by 90 degrees relative to the first one.

4. Method for the identification of people in accordance with claim 3,
**characterised in that** for the purpose of recording the images of the epidermis and hypodermis, the two light sources (15) are switched on and off shortly after one another.

5. Method for the identification of people in accordance with claim 3 or 4,
**characterised in that** one works with both linear and circular polarised light for the selective representation of the epidermis and hypodermis.

6. Method for the identification of people in accordance with claim 5,
**characterised in that** the selection of the epidermis pattern takes place with the polarisation rotation set in a different direction to the illumination and image beam paths, and that of the hypodermis pattern takes place with the polarisation rotation set in the same direction as the illumination and image beam paths, wherein the direction of rotation (right-handed or left-handed) is defined here as the rotational direction of the E-vector viewed in the propagation direction of the light.

7. Method for the identification of people in accordance with one of the claims 3 to 5, **characterised in that** the selection of the epidermis pattern takes place with the polarisation direction set parallel to the illumination and image beam paths, and that of the hypoderrnis pattern takes place with the polarisation direction set perpendicular.

8. Method for the identification of people in accordance with claim 7,
**characterised in that** both patterns are recorded with the same co-ordinates, by a camera, shortly after one another.

9. Method for the identification of people in accordance with claim 7,
**characterised in that** each pattern is recorded respectively by at least one camera.

10. Method for the identification of people in accordance with at least one of the claims 3 to 9, **characterised in that** the information content suitable for this is combined from both available skin patterns with the same co-ordinates.

11. Method for the identification of people in accordance with at least one of the claims 1 to 10, **characterised in that** the data acquisition of the hand lines and/or finger lines takes place from a greater distance.

12. Method for the identification of people in accordance with at least one of the claims 1 to 11, **characterised in that** for the purpose of recognising finger lines by means of a recognition algorithm, the relative position of the minutiae is established and is evaluated towards an identification (e.g. Henry code).

13. Method for the identification of people in accordance with at least one of the claims 1 to 12, **characterised in that** for the purpose of recognising finger lines of the epidermis pattern by means of a recognition algorithm, the frequency of orthogonal features is determined and is evaluated towards an identification.

14. Method for the identification of people in accordance with at least one of the claims 1 to 13, **characterised in that** for the purpose of recognising hand lines, the starting image is divided into segments, and in the segments line sections of different strengths and direction are established.

15. Method for the identification of people in accordance with claim 14,
**characterised in that** in the segment image, the line sections (vectors) are totalled up, as pixel values in different directions, to form frequency distributions, in the manner of a computer tomographic sectional image. (Projections).

16. Method for the identification of people in accordance with claim 13,
**characterised in that** the projections are **characterised by** the amplitudes and, if applicable, also the phases of the components of their Harmonic Approximation (e.g. according to Hartley), and the amplitudes - with or without phase details - is used for numeric pattern identification.

17. Device for implementing the method in accordance with at least one of the claims 1 to 16, with a first light source (15) directed at the hand lines and/or finger lines, patterns of the dermal ridges, patterns of the hypodermis or the like, and a camera (10) with an image receiver (9),
**characterised by** a first polarisation filter (17) arranged in the illumination beam path, and by a second polarisation filter (7) arranged in the image beam path, before the camera (10) whose lens (8) is focused on the object plane 3.

18. Device in accordance with claim 17, **characterised in that** a deviating prism (6) is arranged in the image beam path.

19. Device in accordance with claim 18, **characterised in that** the light source (15) is formed by a pair of lights arranged on both sides of the deviating prism (6).

20. Device in accordance with claim 18 or 19, **characterised in that** arranged on both sides of the deviating prism (6) is a second pair of lamps with a third allocated polarisation filter (17).

21. Device in accordance with one of the claim 17 to 20, **characterised in that** the arrangement is executed without the possibility of mechanical movement.

22. Device in accordance with claim 20, **characterised in that** linear polarisation filters (17) or (7) are arranged, crossed by 90°, in the illumination and image beam paths.

23. Device in accordance with at least one of the preceding claims, **characterised in that** the light sources (15) can be switched on or off depending on the polarisation direction of the polarisation filters (17) allocated to them.

24. Device in accordance with one of the claims 17 to 23, **characterised in that** the image receiver (9) is a CCD chip.

25. Device in accordance with claim 17, **characterised in that** the light source (15) is a diode laser.

26. Device in accordance with claim 17, **characterised in that** the light source (15) is a lamp with glowing metal surfaces at an oblique angle of observation.

27. Device in accordance with at least one of the preceding claims, **characterised in that** in the case of two similarly polarised light sources (15), two polarisation filters with directions standing perpendicular to one another are provided in the image beam path, which can optionally be brought into this individually.

28. Device in accordance with claim 17 to 27, **characterised in that** the camera (10), the lighting set-up (15, 16, 17), and if applicable also further optical additional equipment such as e.g. a deviating prism (6), distance meter, hologram illumination, are accommodated in a mechanically closed housing (11, 12), and optically is [*sic*] accessible only via a glass pane (20), e.g. of bullet-proof glass.

29. Device in accordance with claim 28, **characterised in that** the identification device is designed as a unit for building into walls.

30. Device in accordance with at least one of the preceding claims, **characterised in that** the hand and/or fingers can be positioned in the field of vision and focusing range of the camera (10) by means of a template (21), frame (22; 23).

31. Device in accordance with claim 30, **characterised in that** the inner contour of the template (21) of the frame (22; 23) has the indicated form of the outline of a hand with spread fingers, in the manner of the positioning template (27).

32. Device in accordance with claim 30 and/or 31, **characterised in that** the frame (22; 23) is given in the form of a holographically created aerial image.

33. Device in accordance with claim 30, **characterised in that** the frame (22; 23) consists partly or wholly of metal, and in high frequency terms it is designed and adapted such that it has the antenna function of a pass reader (proximity reader) which works in a contactless manner.

34. Device in accordance with at least one of the claims 30 to 33, **characterised in that** assigned to the frame (22; 23) is an optical distance meter which is set to a fixed distance, and with which the image recording can be controlled.

35. Device in accordance with claim 34, **characterised in that** the distance meter operates optically according to the triangulation principle.

36. Device in accordance with at least one of the preceding claims, **characterised in that** switching on the device into the "ready" mode and/or the triggering of the measuring procedure takes place through the production of a capacitive connection with the ground on which the user is located, via his body, or through the capacitive detuning of the positioning frame with functions as an HF antenna, or of an antenna integrated into the frame, when the hand comes into the correct position in the positioning frame.

37. Device in accordance with at least one of the preceding claims, **characterised in that** the antenna of a pass reader which works in a contactless manner is integrated into the finger support (2) or the cover plate (12).

38. Device in accordance with one of the claims 17 to 37, **characterised in that** provided in the illumination and image beam paths are filters (17, 7) which polarise is a circular manner, and which in accordance with their characteristic are suitable for representing the epidermis and hypodermis images.

## Revendications

1. Procédé pour l'identification de personnes avec utilisation d'une source de lumière (15), d'un filtre de polarisation et d'une caméra (10), à l'aide des lignes des mains et/ou des doigts des personnes, suivant lequel les lignes des mains et/ou des doigts, les dessins des papilles, les dessins du derme ou des dessins analogues sont détectés optiquement sans contact en vue de la prise d'une image, **caractérisé par le fait que** la détection optiquement sans contact est effectuée à l'aide d'un premier filtre de polarisation (17) disposé dans la marche des rayons d'éclairage, d'un second filtre de polarisation (7) disposé dans la marche des rayons de reproduction et d'une caméra (10), en agencement rigide, à savoir sans mouvements mécaniques de l'agencement.

2. Procédé pour l'identification de personnes selon la revendication 1, **caractérisé par le fait que** par traitement d'image, une identification ("signature") numérique est calculée, permettant la comparaison avec des données mémorisées du même type.

3. Procédé pour l'identification de personnes selon la revendication 1 ou 2, **caractérisé par le fait qu'**il est prévu une source de lumière (15) supplémentaire avec un troisième filtre de polarisation (17) dans la marche des rayons d'éclairage, laquelle source est tournée, y compris le filtre de polarisation (17) ajusté, de 90° par rapport au premier autour de l'axe optique.

4. Procédé pour l'identification de personnes selon la revendication 3, **caractérisé par le fait que** les deux sources de lumière (15), en vue de la prise de l'image de l'épiderme et de l'image du derme, sont successivement allumées et éteintes à intervalles rapprochés.

5. Procédé pour l'identification de personnes selon la revendication 3 ou 4, **caractérisé par le fait qu'**il travaille aussi bien avec de la lumière polarisée linéairement qu'avec de la lumière polarisée circulairement en vue de la reproduction sélective du derme et de l'épiderme.

6. Procédé pour l'identification de personnes selon la revendication 5, **caractérisé par le fait que** la sélection du dessin de l'épiderme s'effectue avec rotation de polarisation de sens contraire dans la marche des rayons d'éclairage et dans la marche des rayons de reproduction et celle du dessin du derme avec rotation de polarisation de même sens, le sens de rotation (à gauche ou à droite) étant défini comme sens de rotation du vecteur E en vue dans le sens de propagation de la lumière.

7. Procédé pour l'identification de personnes selon l'une des revendications 3 à 5, **caractérisé par le fait que** la sélection du dessin de l'épiderme s'effectue avec des directions de polarisation parallèles dans la marche des rayons d'éclairage et dans la marche des rayons de reproduction et celle du dessin du derme avec des directions de polarisation perpendiculaires.

8. Procédé pour l'identification de personnes selon la revendication 7, **caractérisé par le fait que** les deux dessins sont détectés suivant les mêmes coordonnées successivement à intervalles rapprochés à l'aide d'une même caméra.

9. Procédé pour l'identification de personnes selon la revendication 7, **caractérisé par le fait que** chaque dessin est détecté respectivement à l'aide d'une caméra.

10. Procédé pour l'identification de personnes selon au moins l'une des revendications 3 à 9, **caractérisé par le fait que** le contenu d'informations approprié des deux dessins de peau disponibles suivant les mêmes coordonnées est combiné.

11. Procédé pour l'identification de personnes selon au moins l'une des revendications 1 à 10, **caractérisé par le fait que** la détection des lignes des mains et/ou des doigts s'effectue à distance relativement importante.

12. Procédé pour l'identification de personnes selon au moins l'une des revendications 1 à 11, **caractérisé par le fait que** pour la reconnaissance des lignes des doigts, la position relative des minuties est déterminée à l'aide d'un algorithme de reconnaissance et exploitée dans le sens d'une identification (par exemple Henry Code).

13. Procédé pour l'identification de personnes selon au moins l'une des revendications 1 à 11, **caractérisé par le fait que** pour la reconnaissance des lignes des doigts du dessin de l'épiderme, la fréquence de caractéristiques orthogonales est déterminée à l'aide d'un algorithme de reconnaissance et exploitée dans le sens d'une identification.

14. Procédé pour l'identification de personnes selon au moins l'une des revendications 1 à 13, **caractérisé par le fait que** pour la reconnaissance des lignes des mains, l'image de départ est subdivisée en segments et des tronçons de lignes d'épaisseurs et de directions différentes sont déterminés dans les segments.

15. Procédé pour l'identification de personnes selon la revendication 14, **caractérisé par le fait que** dans l'image des segments, les tronçons de lignes (vecteurs) sont additionnés à la manière d'une image en coupe par tomographie à commande par ordinateur en tant que valeurs de pixels dans des directions différentes sous la forme de répartitions de fréquences (projections).

16. Procédé pour l'identification de personnes selon la revendication 13, **caractérisé par le fait que** les projections sont **caractérisées par** les amplitudes et le cas échéant également les phases des composantes de leur approximation harmonique (p.ex. selon Hartley) et les amplitudes avec ou sans indication de phase sont utilisées pour la caractérisation numérique des dessins.

17. Dispositif pour la mise en oeuvre du procédé selon au moins l'une des revendications 1 à 16, comprenant une première source de lumière (15) dirigée sur les lignes des mains et/ou des doigts, les dessins des papilles, les dessins du derme ou des dessins analogues, et une caméra (10) comprenant un récepteur d'image (9), **caractérisé par** un premier filtre de polarisation (17) disposé dans la marche des rayons d'éclairage et par un second filtre de polarisation (7) disposé dans la marche des rayons de reproduction devant la caméra (10) dont l'objectif (8) est mis au point sur le plan-objet (3).

18. Dispositif selon la revendication 17, **caractérisé par le fait qu'**un prisme de déviation (6) est disposé dans la marche des rayons de reproduction.

19. Dispositif selon la revendication 18, **caractérisé par le fait que** la source de lumière (15) est constituée par une paire de lampes disposées sur les deux côtés du prisme de déviation (6).

20. Dispositif selon la revendication 18 ou 19, **caractérisé par le fait qu'**il comprend une deuxième paire de lampes disposées sur les deux côtés du prisme de déviation (6), et un troisième filtre de polarisation (17) associé.

21. Dispositif selon l'une des revendication 17 à 20, **caractérisé par le fait que** l'agencement est réalisé sans possibilité de mouvements mécaniques.

22. Dispositif selon la revendication 20, **caractérisé par le fait que** des filtres de polarisation linéaire (17, 7) croisés à 90° sont disposés dans la marche des rayons d'éclairage et dans la marche des rayons de reproduction.

23. Dispositif selon au moins l'une des revendications précédentes, **caractérisé par le fait que** les sources de lumière (15) peuvent être allumées et éteintes en fonction de la direction de polarisation des filtres de polarisation (17) qui leur sont associés.

24. Dispositif selon l'une des revendication 17 à 23, **caractérisé par le fait que** le récepteur d'image (9) est une puce CCD.

25. Dispositif selon la revendication 17, **caractérisé par le fait que** la source de lumière (15) est un laser à diode.

26. Dispositif selon la revendication 17, **caractérisé par le fait que** la source de lumière (15) est une lampe à surfaces métalliques incandescentes sous angle d'observation oblique.

27. Dispositif selon au moins l'une des revendications précédentes, **caractérisé par le fait que** les sources de lumière (15) sont polarisées de la même manière et qu'à la marche des rayons de reproduction sont associés deux filtres de polarisation à directions de polarisation perpendiculaires, qui peuvent y être insérés individuellement et sélectivement.

28. Dispositif selon revendication 17 à 27, **caractérisé par le fait que** la caméra (10), le dispositif d'éclairage (15, 16, 17) ainsi que le cas échéant d'autres dispositifs optiques additionnels tels que p.ex. prisme de déviation (6), télémètre, éclairage d'hologramme sont logés dans un boîtier (11, 12) mécaniquement fermé et ne sont accessible optiquement qu'à travers une vitre (20) p.ex. en verre à l'épreuve des projectiles.

29. Dispositif selon la revendication 28, **caractérisé par le fait que** le dispositif d'identification est réalisé sous forme d'unité à encastrer dans un mur.

30. Dispositif selon au moins l'une des revendications précédentes, **caractérisé par le fait que** les mains et/ou les doigts peuvent être positionnés à l'aide d'un gabarit (21), cadre (22; 23) dans le champ et la zone de mise au point de la caméra (10).

31. Dispositif selon la revendication 30, **caractérisé par le fait que** le contour intérieur du gabarit (21) du cadre (22; 23) représente l'esquisse du contour d'une main à doigts écartés à la manière du gabarit de positionnement (27).

32. Dispositif selon la revendication 30 et/ou 31, **caractérisé par le fait que** le cadre (22; 23) est fourni sous la forme d'une image produite par voie holographique.

33. Dispositif selon la revendication 30, **caractérisé par le fait que** le cadre (22; 23) est constitué partiellement ou entièrement de métal et est réalisé et adapté du point de vue haute fréquence de manière à exercer la fonction d'antenne d'un lecteur de carte d'identité travaillant sans contact (proximity reader).

34. Dispositif selon au moins l'une des revendications 30 à 33, **caractérisé par le fait qu'**un télémètre optique réglé sur une distance fixe, à l'aide duquel la prise d'image peut être commandée, est associé au cadre (22; 23).

35. Dispositif selon la revendication 34, **caractérisé par le fait que** le télémètre fonctionne optiquement selon le principe de la triangulation.

36. Dispositif selon au moins l'une des revendications précédentes, **caractérisé par le fait que** la commutation du dispositif en état de disponibilité et/ou le déclenchement de l'opération de mesure s'effectue par l'établissement d'une liaison capacitive avec le sol sur lequel se trouve l'utilisateur, en passant par le corps de ce dernier, ou par le désaccord capacitif du cadre de positionnement à fonction d'antenne HF ou d'une antenne intégrée au cadre, lorsque la main atteint la position correcte dans le cadre de positionnement.

37. Dispositif selon au moins l'une des revendications précédentes, **caractérisé par le fait que** l'antenne d'un lecteur de carte d'identité travaillant sans contact est intégrée à l'appui de doigt (2) ou à la plaque de recouvrement (12).

38. Dispositif selon l'une des revendication 17 à 37, **caractérisé par le fait que** dans la marche des rayons d'éclairage et la marche des rayons de reproduction sont disposés des filtres (17, 7) de polarisation circulaire qui sont à même, selon leur constitution, de représenter l'image de l'épiderme et l'image du derme.
